# EUROPÄISCHE PATENTSCHRIFT

(11) **EP 2 650 557 B1**
(45) Veröffentlichungstag und Bekanntmachung des Hinweises auf die Patenterteilung: **18.03.2020**
(21) Anmeldenummer: 13162486.8
(22) Anmeldetag: 05.04.2013
(51) Int. Cl.: F16D 65/56, F16D 65/66, F16D 125/26, F16D 125/48, F16D 127/06

(54) **Reibungsbremse**
Friction brake
Frein à friction

(30) Priorität: 12.04.2012 AT 501302012
(43) Veröffentlichungstag der Anmeldung: 16.10.2013
(73) Patentinhaber: VE Vienna Engineering Forschungs- und Entwicklungs GmbH, 1010 Wien (AT)
(72) Erfinder: Putz, Michael, 2301 Groß Enzersdorf (AT)
(74) Vertreter: Patentanwälte Pinter & Weiss OG

(56) Entgegenhaltungen:
- WO-A1-2010/133463
- DE-B4- 10 392 252
- US-B2- 7 497 306

## Beschreibung

Die gegenständliche Erfindung betrifft eine Reibungsbremse mit einem Bremsbelag und einer Andrückeinheit zum Andrücken des Bremsbelages gegen eine Reibfläche, wobei der Bremsbelag an einem Halteteil anliegt und im Halteteil eine Andrückwelle oder ein Wellenzapfen drehbar gelagert ist.

Bei elektromechanischen Bremsen werden die zum Bremsen erforderlichen Bremskräfte aus einem elektromechanischen Antrieb erzeugt. In der Regel sind die Einbauverhältnisse der Bremse, insbesondere bei Fahrzeugbremsen, so, dass nur ein sehr beschränkter Bauraum für die Aufnahme der Bremse verfügbar ist, weshalb Elektromotoren kleiner Baugröße verwendet werden müssen. Dabei muss aus der hohen Drehzahl des bevorzugt kleinen Elektromotors auch die sehr hohe Anpresskraft des Bremsbelages erzeugt werden. In einem Fahrzeug können dabei durchaus Bremsaktuator-Antriebsdrehmomente von bis zu 40 Nm und Anpresskräfte für die Bremsbeläge von bis zu 60 kN notwendig sein. In einem Fahrzeug ist eine Bremse z.B. als Schwimmsattel-Scheibenbremse ausgeführt, die unter den erschwerten Platzbedingungen in bekannter Weise direkt unter der Felge verbaut ist und die Aufrechterhaltung des üblichen Lenkwinkels ohne Kollisionen mit anderen Teilen des Fahrzeugs, wie z.B. einer Antriebswelle oder Radaufhängungsteilen, wie z.B. Stoßdämpfer, sicherstellen muss. Diese Platzsituation wird noch weiters dadurch verschärft, da für eine elektromechanische Bremse in der Regel auch ein Verschleißnachsteller benötigt wird, um den Verschleiß am Bremsbelag ausgleichen zu können. Eine solche elektromechanische Bremse ist z.B. aus der WO 2010/133 463 A1 bekannt. Bei dieser Bremse wird das Drehmoment eines Elektromotors über ein Gestänge und Hebel auf den Andrückmechanismus der Bremse übertragen. Im Andrückmechanismus ist ein Halteteil für den Bremsbelag vorgesehen, der über einen exzentrisch gelagerten Zapfen gegen die Bremsscheibe gedrückt wird. Obwohl diese Konstruktion ausreichend klein ausgeführt werden kann, um auch in einem Fahrzeug eingesetzt werden zu können, so sind damit andere Probleme, die im Betrieb der Bremse auftreten, nur schwer bzw. nur unzureichend lösbar.

Die Bremse, und insbesondere der Andrückmechanismus, muss ausreichend gegen die harschen Umgebungsbedingungen, in denen die Bremse betrieben wird, geschützt sein, um den Betrieb der Bremse über eine geforderte Lebensdauer sicherstellen zu können. Die Bremse bzw. der Andrückmechanismus muss daher vor Straßenschmutz, Feuchtigkeit, Steinschlägen, Salz und andere korrosive Stoffe, etc., geschützt sein. Bei einer Bremse mit Gestänge und Hebeln wie z.B. in der WO 2010/133 463 A1 beschrieben, lässt sich das kaum bewerkstelligen. Weiters entstehen beim Bremse auch hohe Temperaturen, insbesondere im Bereich der Bremsbeläge und Bremsscheibe, gegen die die hitzeempfindlichen Teile der Bremse, wie die Elektromotoren oder die Mechanik, bestmöglich geschützt werden muss, um die Funktion der Bremse über den gesamte Einsatzbereich sicher aufrecht zu erhalten. Eine elektromechanische Bremse muss daher im Wesentlichen die folgenden Probleme lösen:
- Sehr eingeschränkte Platzverhältnisse
- Ausreichender Schutz gegen die Umgebungsbedingungen
- Erzeugen hoher Anpresskräfte

Dokument US 7 497 306 B2 offenbart eine Reibungsbremse mit einem Bremsbelag gemäß dem Oberbegriff von Anspruch 1.

Es ist folglich eine Aufgabe der gegenständlichen Erfindung, eine elektromechanische Bremse anzugeben, mit der die obigen Probleme allesamt gelöst werden können.

Diese Aufgabe wird erfindungsgemäß dadurch gelöst, indem die Andrückeinheit als Zahnrad-Andrückgetriebe ausgeführt ist, das in einem Andrückgetriebegehäuse angeordnet ist, wobei im Andrückgetriebegehäuse eine Betätigungswelle drehbar gelagert angeordnet ist, in der die Andrückwelle in einer axialen, exzentrischen Bohrung gelagert ist oder an dessen axialem Ende der Wellenzapfen exzentrisch angeordnet ist, und das Zahnrad-Andrückgetriebe die Betätigungswelle verdreht und das Andrückgetriebegehäuse an der Reibungsbremse angeordnet ist, ist und als ortsfester Bremsenteil für die Andrückeinheit dient, wobei das Andrückgetriebegehäuse zur Aufnahme der beim Bremsen durch den Exzenter erzeugten Belagsandrükkräfte und zur Ableitung der Belagsandrückkräfte an die Reibungsbremse vorgesehen ist. Mit dieser Maßnahme lassen sich alle obigen Forderungen an eine elektromechanische Bremse lösen. Ein Getriebe kann bei hohen Übersetzungen sehr kompakt ausgeführt werden, womit die verfügbaren Platzverhältnisse ausreichen. Ein Getriebegehäuse kann einfach und mit herkömmlichen Konstruktionsteilen, wie z.B. Dichtungen, Dichtringe, etc., hermetisch nach außen abgeschlossen werden, womit ein ausreichender Schutz gegen die Umgebungsbedingungen sichergestellt ist. Normalerweise sind Getriebegehäuse materialsparend so ausgelegt, dass sie problemlos den eigenen Kräften standhalten, also den Kräften aus den Drehmomenten an den Ein- und Ausgängen und den inneren Drehmomenten an den Zahnrädern und den Lagerkräften. Erfindungsgemäß wird das Getriebegehäuse nun für erheblich größere, zusätzliche Belastungen, nämlich auf die Belagsandrückkräfte, die durchaus im Bereich von 60kN liegen können, ausgelegt. Durch diese ungewöhnliche Maßnahme können auch die hohen Andrückkräfte bei einer äußerst kompakten Konstruktion verwirklicht werden.

Das Getriebegehäuse kann thermisch sehr einfach und vorteilhaft von der Bremse entkoppelt werden, wenn der Bremsbelag an einem Halteteil angeordnet ist und der Halteteil an der Andrückeinheit angeordnet ist. Damit kann das Getriebegehäuse sogar als Wärmesenke zur Kühlung des Elektromotors, der die Bremse betätigt (Andrückmotor, Bremsaktuator) genutzt werden. Sichergestellt wird dabei, dass der Andrückmechanismus unempfindlicher gegen hohe Temperaturen im Bereich der Bremsbeläge ist.

Vorteilhaft ist das Andrückgetriebegehäuse auch zur Aufnahme der beim Bremsen entstehenden Reibungskräfte vorgesehen, womit kein eigener Anschlag für den Halteteil bzw. den Bremsbelag zur Aufnahme der Reibungskräfte erforderlich ist und die Reibungsbremse konstruktiv weiter vereinfacht werden kann.

Bevorzugt wird das Andrückgetriebegehäuse oder der Halteteil an einem Verschleißnachsteller angeordnet, um den Verschleiß an den Bremsbelägen auszugleichen und um damit auch die notwendigen Betätigungswege der Reibungsbremse zu beschränken. Der Verschleißnachsteller umfasst vorteilhaft eine Verschleißnachstellschraube (oder mehrere, vorzugsweise zwei), die in das Andrückgetriebegehäuse oder in den Halteteil oder in einer im Andrückgetriebegehäuse oder Halteteil angeordneten Gewindehülse geschraubt ist, womit sich eine besonders einfache Konstruktion ergibt. Gleichzeitig kann das Gewinde der Verschleißnachstellschraube selbstsperrend ausgeführt sein, womit der Verschleißnachsteller nur zum Betätigen, also zum Ausgleichen eines Verschleißes, angetrieben bzw. mit Energie versorgt sein muss.

Bevorzugt wird der Verschleißnachsteller durch einen Elektromotor angetrieben, der in einem Verschleißnachstellermotorgehäuse angeordnet wird. Um sehr kompakte Verschleißnachstellmotor verwenden zu können, kann vorteilhaft vorgesehen sein, dass der Verschleißnachstellmotor ein Verschleißnachstellgetriebe antreibt.

Um zu verhindern, dass die hohen Andrückkräfte beim Betätigen der Reibungsbremse in den Verschleißnachsteller abgeleitet werden, ist vorteilhaft vorgesehen, dass sich die Verschleißnachstellschraube an der Reibungsbremse abgestützt ist. Damit werden die Andrückkräfte in einen Bremsenteil, wie z.B. dem Bremssattel, abgleitet.

Wenn das Andrückgetriebe als mehrstufiges Getriebe mit Stirnzahnrädern ausgeführt ist, lässt sich auf einfache Weise ein sehr kompaktes Getriebe mit hohem Wirkungsgrad und großer Übersetzung realisieren.

Um die Montage der Andrückeinrichtung bzw. der Reibungsbremse zu erleichtern, kann vorteilhaft vorgesehen sein, das Andrückgetriebegehäuse mehrteilig auszuführen, wobei zumindest eines der Teilgehäuse zur Aufnahme der beim Bremsen entstehenden Belagsandrücckräfte vorgesehen ist.

Wenn am Andrückgetriebegehäuse ein Andrückmotorgehäuse zur Aufnahme eines Andrückmotors angeordnet ist, wobei der Andrückmotor das Andrückgetriebe antreibt, vorgesehen ist, kann einerseits sichergestellt werden, dass die Andrückmotoren möglichst weit entfernt von den Bremsenteilen hoher Temperatur, angeordnet werden und andererseits könnte auf diese Weise das Andrückgetriebegehäuse gleichzeitig als Wärmesenke (also als Kühlkörper) für die Andrückmotoren dienen.

Wenn in der Reibungsbremse ein Federelement mit zwei Anschlagsenden vorgesehen ist, wobei ein erstes Anschlagende mit einem ersten Anschlag am Andrückgetriebegehäuse und das zweite Anschlagende mit einem Anschlag an der Betätigungswelle zusammenwirkt, kann auf einfache Weise eine Rückstellkraft erzeugt werden, um zu bewirken, dass sich die Reibungsbremse auf einfache Weise selbsttätig lösen kann.

Wenn am Andrückgetriebegehäuse ein zweiter Anschlag vorgesehen ist, der mit dem Anschlag an der Betätigungswelle zusammenwirkt, kann auf einfache Weise ein stabile, sichere Parkbremsposition erreicht werden. Dieser zweite Anschlag kann aber vorteilhaft auch dazu genutzt werden, um eine Absolutposition des Andrückmotors zu finden.

Die gegenständliche Erfindung wird nachfolgend unter Bezugnahme auf die Figuren 1 bis 5 näher erläutert. Die Figuren zeigen dabei schematisch und beispielhaft bevorzugte Ausgestaltungen der Erfindung. Dabei zeigt
Fig.1 eine perspektivische Ansicht einer erfindungsgemäßen Reibungsbremse in Form einer Schwimmsattel-Scheibenbremse,
Fig.2 den Andrückmechanismus der Reibungsbremse
Fig.3 das Andrückgetriebe des Andrückmechanismus,
Flg.4 eine Seitenansicht des Andrückgetriebes und
Fig.5 eine Darstellung des Exzentermechanismus zum Andrücken der Bremsbeläge.

Die Erfindung wird nachfolgend beispielhaft anhand einer Schwimmsattel-Scheibenbremse näher erläutert. Schwimmsattel-Scheibenbremsen sind an sich hinlänglich bekannt, weshalb hier nicht näher auf die Eigenschaften und Funktion einer Schwimmsattel-Scheibenbremsen und auf den grundsätzlichen Einbau einer Schwimmsattel-Scheibenbremsen, z.B. in einem Fahrzeug, eingegangen wird. Die Erfindung kann aber grundsätzlich auch auf andere Bremstypen, wie z.B. eine Trommelbremse, angewendet werden. Ebenso kann auch eine andere Reibfläche als eine Bremsscheibe oder eine Bremstrommel vorgesehen sein, z.B. eine mehr oder weniger ebene Fläche, z.B. als Bremse für eine Linearbewegung.

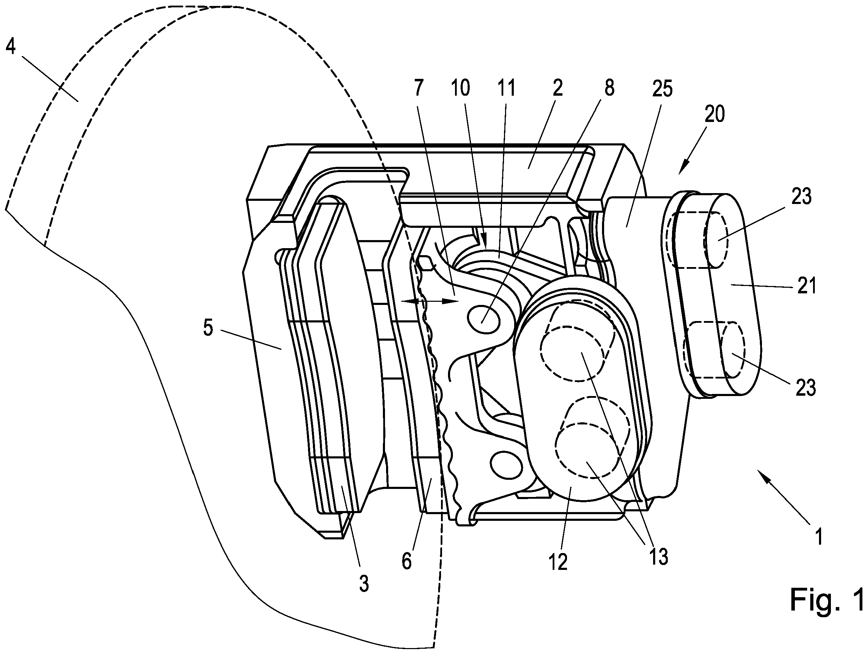

Fig.1 zeigt eine Reibungsbremse 1 mit einem Schwimmsattel 2, der eine Reibfläche, hier in Form einer Bremsscheibe 4 (hier nur strichliert angedeutet), umgibt. Am Schwimmsattel 2 ist ein feststehender (bezogen auf den Schwimmsattel 2) Bremsbelag 3 und ein beweglicher (ebenfalls bezogen auf den Schwimmsattel 2) Bremsbelag 6 angeordnet. Der bewegliche Bremsbelag 6 wird zum Bremsen durch eine Andrückeinrichtung 10 gegen die Reibfläche, hier die Bremsscheibe 4, gedrückt, wie durch den Doppelpfeil in Fig.1 angedeutet.

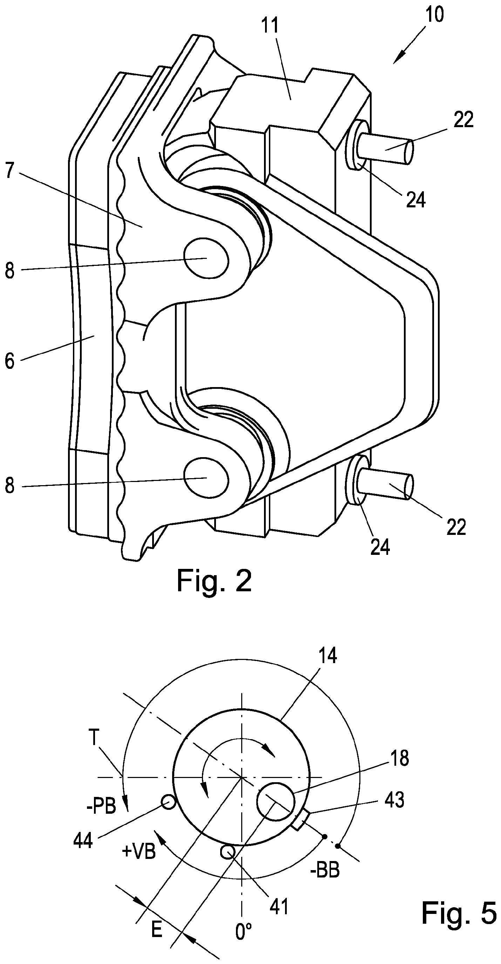

Die Andrückeinrichtung 10 ist hier an einem Verschleißnachsteller 20 angeordnet, der an einem Teil der Reibungsbremse 1, hier am Schwimmsattel 2, angeordnet ist. Die gesamte Andrückeinrichtung 10 wird dabei vom Verschleißnachsteller 20 zum Ausgleich eines entstehenden Verschleißes an den Bremsbelägen 3, 6 oder zur Überwindung eines Luftspaltes zwischen Bremsbelag 3, 6 und Reibfläche bewegt. Die Andrückeinrichtung 10 wird dabei in der Reibungsbremse 1, z.B. wie hier im Schwimmsattel 2, geführt. Da der Verschleißnachsteller 20 nur sehr geringe Wege und/oder diese nur von Zeit zu Zeit verstellen muss, ist die Andrückeinrichtung 10 ortsfest in der Reibungsbremse 1 angeordnet. Als Antrieb des Verschleißnachstellers 20 dient hier ein oder mehrere Verschleißnachstellermotor(en) 23 (strichliert angedeutet), die in einem Verschleißnachstellermotorgehäuse 21, das am Verschleißnachsteller 20, oder an einem anderen Bremsenteil, angeordnet ist, untergebracht sind. Der Verschleißnachsteller 20 kann entweder nur bei übermäßigem Luftspalt zwischen Bremsbelag 3, 6 und Bremsscheibe 4 zur Nachführung benutzt werden (ähnlich wie bei Trommelbremsen), oder er kann auch kurz vor jeder Bremsbetätigung genutzt werden, um den Luftspalt (auch beide) zwischen Bremsbelag 3, 6 und Bremsscheibe 4 auf Null zu bringen und sogar, um eine erste kleine Andrückkraft in die Reibungsbremse 1 einzubringen. Der Verschleißnachsteller 20 kann z.B. in Form einer angetriebenen Verschleißnachstellschraube 22 (siehe Fig.2) ausgeführt sein, die in eine in der Andrückeinrichtung 10 angeordnete Gewindehülse 24, oder einem direkt in einem Teil der Andrückeinrichtung 10 eingeschnittenes Gewinde, geschraubt ist. Auf diese Weise kann die Andrückeinrichtung 10 quer zur Bremsscheibe 4 und relativ zum ortsfesten Teil der Reibungsbremse 1, hier der Schwimmsattel 2 eventuell mit Verschleißnachsteller 20, verschoben werden. Bevorzugt werden zwei außermittig angeordnete Verschleißnachstellschrauben 22 mit selbstsperrendem Gewinde vorgesehen, um einerseits den Mittelbereich zwischen den Verschleißnachstellschrauben 22 für die Andrückeinrichtung 10 freizuhalten und andererseits eine möglichst steife Bremse zu erhalten, die unter der Bremsennormalkraft auf den Bremsbelag 3, 6 möglichst wenig nachgibt. Natürlich kann auch eine einzige Verschleißnachstellschraube verwendet werden, die dann vorzugsweise ungefähr in der Mittellinie der Belagsfläche angeordnet sein kann. Der Verschleißnachstellermotor 23 kann direkt auf die Verschleißnachstellschraube 22 wirken, oder indirekt über ein Verschleißnachstellgetriebe, das in einem separaten Verschleißnachstellgetriebegehäuse 25 oder ebenfalls im Verschleißnachstellermotorgehäuse 21 untergebracht sein kann. Im ersten Fall wäre das Verschleißnachstellermotorgehäuse 21 am Verschleißnachstellgetriebegehäuse 25 angeordnet wie in Fig.1 dargestellt. Das Verschleißnachstellgetriebe ist dabei vorteilhaft als ein- oder mehrstufiges Zahnradgetriebe ausgeführt.

Bei Betätigen der Reibungsbremse 1, wobei der Bremsbelag 3, 6 gegen die Bremsscheibe 4 gedrückt wird, sollen vorzugsweise keine hohen Kräfte in den Verschleißnachsteller 20 eingebracht werden. Das kann in axialer Schraubenrichtung dadurch erreicht werden, indem sich die Verschleißnachstellerschraube 22 an einem Bremsenteil, wie z.B. am Schwimmsattel 2, abstützt, womit keine Axialkraft in den Verschleißnachsteller 20 eingebracht wird. Die Verschleißnachstellschraube 22 bringt auch kein Drehmoment aus der hohen Belagsandrückkraft in den Verschleißnachsteller 20 ein, weil sich eine selbstsperrende Verschleißnachstellschraube 22 aufgrund der Gewindesteigung unter Axialkraft und Reibungen nicht drehen kann.

Selbstverständlich kann der Verschleißnachsteller 20 auch anders ausgeführt sein. Die Verschleißnachstellung könnte z.B. mechanisch erfolgen, z.B. wie bei einer bekannten Trommelbremse, indem ein Zahn eines Schrittgetriebes auf einer Schraube weitergedreht wird, wenn übermäßig Hub zum Betätigen der Bremse nötig ist. Es könnte aber auch ein Andrückmotor 13 für die Verschleißnachstellung verwendet werden, z.B. in dem man ein Drehmoment aus einem Andrückgetriebe (siehe unten) oder aus einem Andrückmotor selbst auskoppelt, z.B. durch einen zusätzlichen Getriebeausgang oder durch das Stützmoment, das nötig ist, um Andrückmotor bzw. Andrückgetriebe gegen Mitdrehen zu stützen. Dazu könnte der Andrückmotor bzw. das Andrückgetriebe konstruktiv so frei gemacht werden, dass gewisse Verdrehungen möglich sind, die zur Verschleißnachstellung genutzt werden können. Dabei würde sich zuerst der Andrückmotor bzw. das Andrückgetriebe gegenüber der Reibungsbremse 1 verdrehen, wobei diese Bewegung für den Verschleißnachsteller 20 genutzt wird. Sobald der Bremsbelag anliegt, wäre die weitere Verdrehung des Andrückmotors bzw. des Andrückgetriebes gesperrt, wodurch das Drehmoment zur Bremsenbetätigung verwendet wird. So könnte der Verschleißnachsteller 20 auch ohne eigenen Antrieb aufgebaut werden.

Die Reibungsbremse 1 könnte aber natürlich auch gänzlich ohne Verschleißnachsteller 20 ausgeführt sein. In diesem Fall ist die Andrückeinrichtung 10 ortsfest an einem Bremsenteil, wie z.B. am Schwimmsattel 2, angeordnet. Ebenso könnte die Reibungsbremse 1 nur mit einem beweglichen Bremsbelag 6, mit oder ohne Verschleißnachsteller 20, ausgeführt sein. Damit könnte man auch auf den Schwimmsattel 2 verzichten, der durch einen fixen Bremsenteil ersetzt werden könnte.

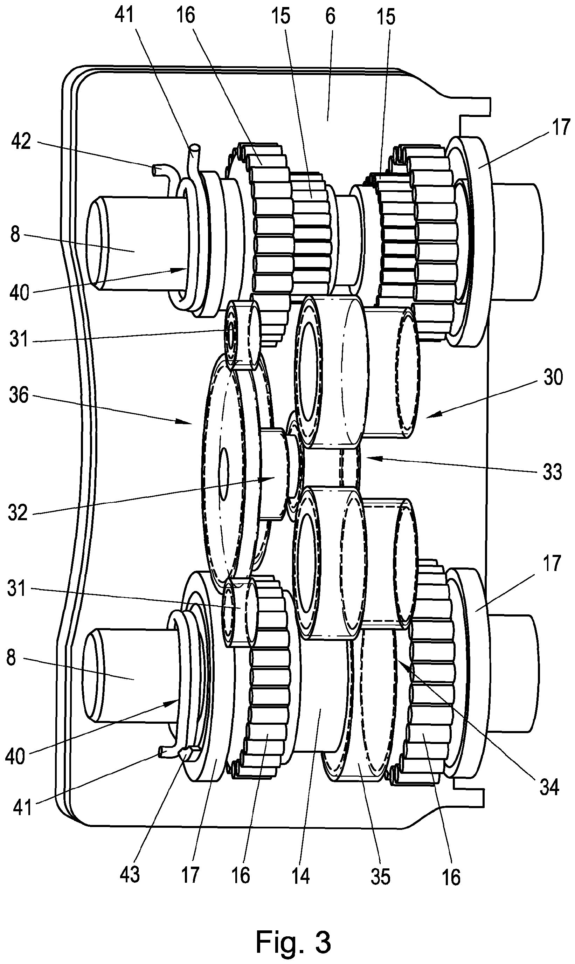

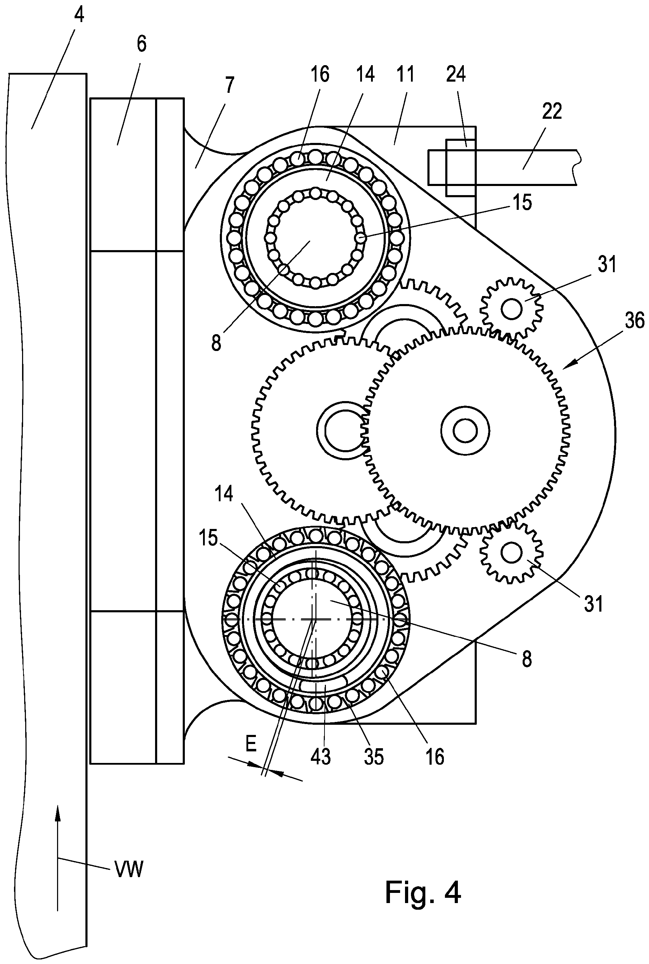

Wie in Fig.2 dargestellt, umfasst die Andrückeinrichtung 10, die unten mit Bezug auf Fig.3 und 4 ausführlicher beschrieben ist, hier einen Halteteil 7, an dem der Bremsbelag 6 entweder direkt oder mittels Belagsträger anliegt. Im Halteteil 7 ist eine Andrückwelle 8 beidseitig gelagert. Die Andrückwelle 8 ist wiederum in einer als Hohlwelle ausgeführten Betätigungswelle 14 gelagert, wobei die axiale Bohrung der Betätigungswelle 14 exzentrisch zur Drehachse der Betätigungswelle 14 ausgeführt ist. Die Betätigungswelle 14, die an einem ortsfesten, bzw. quasi-ortsfesten, Bremsenteil, hier das Andrückgetriebegehäuse 11, gelagert ist, wird durch ein Betätigungsmittel verdreht, sodass die Andrückwelle 8 und damit der Halteteil 7 durch die exzentrische Bohrung, je nach Drehrichtung, zur Bremsscheibe 4, oder von dieser weg, bewegt wird. Die Belagsandrückkräfte werden hier somit über einen Exzenter erzeugt.

In Fig.2 ist das Andrückgetriebegehäuse 11 im Inneren des Halteteiles 7 angeordnet, wobei der Halteteil 7 das Andrückgetriebegehäuse 11 U-förmig umschließt. Alternativ kann diese Anordnung aber auch umgekehrt sein, indem das Andrückgetriebegehäuse 11 U-förmig ausgeführt wird und der Halteteil 7 im Inneren des U-förmigen Andrückgetriebegehäuses 11 angeordnet wird. Grundsätzlich könnte aber auch vorgesehen sein, dass der Bremsbelag 6 am Andrückgetriebegehäuse 11 anliegt und der Verschleißnachsteller 20, z.B. über die Verschleißnachstellschraube 22, am Halteteil 7 angreift, oder der Halteteil 7 an einem Bremsenteil angeordnet ist.

Als Betätigungsmittel ist erfindungsgemäß ein Zahnrad-Andrückgetriebe 30 vorgesehen. Das Andrückgetriebe 30 ist in einem Andrückgetriebegehäuse 11 untergebracht, das als ortsfester Bremsenteil für die Andrückeinrichtung 10 dient. Das Andrückgetriebegehäuse 11 muss in der erfindungsgemäßen Ausführung somit die gesamten Belagsandrückkräfte aufnehmen und an die Reibungsbremse 1, hier an den Schwimmsattel 2, ableiten. Am Andrückgetriebegehäuse 11 ist weiters ein Andrückmotorgehäuse 12 vorgesehen, in dem ein oder mehrere Andrückmotoren 13 (strichliert angedeutet) zur Betätigung der Reibungsbremse 1 angeordnet sind.

In Fig.2 ist die Andrückeinheit 10 mit Bremsbelag 6 freigeschnitten dargestellt. Man erkennt hier insbesondere, dass der Halteteil 7 für den Bremsbelag 6 an der Andrückwelle 8 gelagert ist. Man erkennt in Fig.2 weiters auch die beiden, hier außermittig angeordneten Verschleißnachstellschrauben 22 des Verschleißnachstellers 20. Die Belagsandrückkräfte, die beim Bremsen auftreten, werden über das Andrückgetriebegehäuse 11 auf die Verschleißnachstellschrauben 22, und von dort vorteilhaft an die Reibungsbremse 1, abgeleitet.

Durch die Belagsandrückkräfte entstehen beim Bremsen aber auch Reibkräfte (Belagsandrückkraft x Reibbeiwert zwischen Bremsbelag und Reibfläche), die versuchen, den Bremsbelag 6 "mitzunehmen". Daraus kann bekanntermaßen auch Selbstverstärkung entstehen. Diese Reibkräfte werden bevorzugt über den Halteteil 7 ebenfalls in das Andrückgetriebegehäuse 11 eingebracht und werden vom Andrückgetriebegehäuse 11 aufgenommen und an die Reibungsbremse 1, eventuell über einen Verschleißnachsteller 20, abgeleitet.

In Fig.3 ist nun der Andrückmechanismus in Form eines Zahnrad-Andrückgetriebes 30 freigeschnitten dargestellt. Das Andrückgetriebe 30 ist hier symmetrisch ausgeführt, womit durch Verwendung von zwei Betätigungswellen 14 ein gleichmäßigeres Andrücken des Bremsbelages 6 an die Bremsscheibe 4 erzielt werden kann. Es kann der Bremsbelag 6 aber selbstverständlich auch nur mit einer Betätigungswelle 14 angedrückt werden, womit der Andrückmechanismus konstruktiv einfacher wird. Die Andrückwelle 8 ist in der axialen Bohrung einer als Hohlwelle ausgeführten Betätigungswelle 14 gelagert. Die Bohrung zur Aufnahme der Andrückwelle 8 ist exzentrisch zur Drehachse der Betätigungswelle 14, was unten unter Bezugnahme auf die Fig.4 näher erläutert wird. Dazu ist z.B. ein inneres Lager 15, vorzugsweise ein Nadellager, zwischen Andrückwelle 8 und Betätigungswelle 14 vorgesehen. Die obere Betätigungswelle 14 ist in Fig.3 ausgeblendet, um die inneren Lager 15 sichtbar zu machen. Die Betätigungswelle 14 ist hier mit einem äußeren Lager 16, vorzugsweise ein Nadellager, im Andrückgetriebegehäuse 11 gelagert. Die ineinander verschachtelten inneren und äußeren Lager 15, 16 benötigen wesentlich weniger Baubreite, als wenn die Lager nebeneinander angeordnet wären. Auch die Biegebelastung der Andrückwelle 8 wird dadurch vorteilhaft wesentlich verringert. Sehr wohl wäre es aber auch möglich, das innere und äußere Lager 15, 16 nebeneinander anzuordnen. Bei den Variante mit nebeneinander angeordneten Lagern (die erfindungsgemäß auch möglich ist), bleiben die Lager am äußeren Umfang gleich wie in Fig. 3 im Andrückgehäuse 11 gelagert, aber die sonst im inneren der Hohlwelle befindlichen Lager kommen links und rechts auf der Andrückwelle 8 in Lager, die sich im Halteteil 7 befinden.

Ebenso ist eine Ausführung denkbar, bei der an den axialen Enden der Betätigungswelle 14 exzentrische Zapfen angeordnet sind, wobei die Zapfen im Halteteil 7 gelagert werden. Damit könnte das innere Lager 15 auch eingespart werden.

Die Verwendung einer exzentrischen Betätigungswelle 14, als Hohlwelle oder mit exzentrischen Zapfen, erlaubt eine sehr hohe Kraftübersetzung bei kleinen Betätigungswegen, weil die Exzentrizität sehr klein gewählt werden kann. Dabei gilt, dass je kleiner die Verformungen in der Reibungsbremse gehalten werden können, desto weniger Exzentrizität ist zum Andrücken notwendig. Damit kann bei der Exzenterkonstruktion die Exzentrizität bis nahe Null gehen. Die Exzentrizität liegt z.B. typischerweise im Bereich von 0,1 bis 0,75mm. Weiters kann die exzentrische Betätigungswelle 14 zur Betätigung der Bremse prinzipiell um beliebige Winkelgrade gedreht werden, also auch volle Umdrehungen. Das erlaubt einerseits möglichst ausreichend große Hübe und erlaubt weiters besondere Stellungen, wie z.B. das Anfahren eines scheibennahen Totpunktes für eine Parkbremsfunktion oder Anfahren einer eigenen Parkbremsstellung durch Verdrehung der exzentrischen Betätigungswelle 14 entgegen der normalen Betriebsbremsstellung.

Um das Andrückgetriebegehäuse 11 hermetisch nach außen abzuschließen und damit gegen die Umgebungsbedingungen zu schützen, können auf der Andrückwelle 8 und/oder der Betätigungswelle 14 auch Wellendichtringe 17 angeordnet sein.

Getriebeeingangsseitig ist hier ein Sammelgetriebe 36 vorgesehen, um die Drehmomente der hier vorgesehenen zwei Andrückmotoren 13 zusammenzuführen. Die Andrückmotoren 13 sind dabei an den beiden Eingangsritzeln 31 angeordnet. Auf das Sammelgetriebe 36 folgt hier eine erste Getriebestufe 32 und eine zweite Getriebestufe 33, mit der gleichzeitig auf zwei Abtriebgetriebe 34 aufgeteilt wird. Das Abtriebritzel 35 des oberen Abtriebgetriebes 34 ist hier zwecks der Übersicht ausgeblendet. Das Abtriebritzel 35 ist auf der Betätigungswelle 14 angeordnet. Selbstverständlich könnte das Andrückgetriebe 30 auch anders ausgeführt sein, z.B. mit einer anderen Anzahl von Getriebestufen oder einer anderen Anordnung von Zahnrädern. Es kann natürlich auch nur ein Andrückmotor 13 vorhanden sein, womit das Sammelgetriebe 36 entfallen könnte, es können aber auch drei oder mehr Andrückmotoren 13 sein, wenn der Platz dies zulässt.

Es hat sich aber gezeigt, dass die dargestellte Ausführung des Andrückgetriebes 30 besonders vorteilhaft ist. Da der Platz für die Andrückmotoren 13 relativ begrenz ist, können diese nicht beliebig groß gemacht werden. Daher ist es vorteilhaft, die Verluste im Andrückgetriebe 30 so klein wie möglich zu halten. Dazu werden bevorzugt Stirnradzahnräder statt Schnecken oder Kegelrädern verwendet. Da es aus Gründen der Betriebssicherheit sichergestellt sein muss, dass die Reibungsbremse 1 im energielosen Zustand entweder gelöst wird (z.B. bei Straßenfahrzeugen) oder selbsttätig bremst (z.B. bei Schienenfahrzeugen, Kränen oder Windrädern oder Maschinen allgemein), sollte der Getriebewirkungsgrad ebenfalls hoch sein, um Selbstsperrung im Andrückgetriebe 30 zu vermeiden. Ein Verzicht auf Schnecken und Kegelräder bedeutet allerdings Verzicht auf Achsumlenkungen, was eine erhebliche Einschränkung in der Auslegung des Andrückgetriebes 30 darstellt. Auch kann das mögliche sehr hohe Übersetzungsverhältnis von Schnecken nicht zur Verkleinerung von Stufenzahl und Baugröße genutzt werden. Die Zahl der Getriebestufen ist aus Wirkungsgradgründen so klein wie möglich zu halten, allerdings unter der Einschränkung, dass die großen Zahnräder natürlich die Abmessungen des Andrückgetriebegehäuse 11 diktieren und die Ritzel eine Mindestzähnezahl haben müssen. Das Andrückgetriebe 30 muss zudem über einen großen Temperaturbereich einwandfrei laufen und möglich spielarm sein, einerseits um Geräusche zu minimieren und andererseits, um die Schläge von einer Zahnflanke auf die Gegenflanke zu minimieren, wenn die Drehrichtung plötzlich umgekehrt wird. Das in Fig.3 beschriebene Andrückgetriebe 30 erfüllt alle oben angeführten Kriterien und das bei einer sehr kompakten Baugröße. Zudem ist natürlich auch auf die Zusammenbaubarkeit Rücksicht zu nehmen. Dazu ist das hier gezeigte Andrückgetriebe 30 so ausgeführt, dass es einfach auseinandernehmbar und zusammenbaubar ist.

Es wäre auch denkbar, das Andrückgetriebegehäuse 11 auf zwei oder mehrere Teilgetriebe aufzuteilen, wobei ein erstes Gehäuse z.B. das Sammelgetriebe 36 aufnimmt und das Andrückmotorgehäuse 12 trägt und ein zweites Gehäuse die restlichen Getriebestufen enthält und zur Aufnahme der Belagsandrückkräfte ausgelegt ist. Das kann zum Einen die Konstruktion und Herstellung des Andrückgetriebegehäuses 11 vereinfachen und zum Anderen auch die Montage der Andrückeinheit 10 erleichtern.

Der angestrebte hohe Wirkungsgrad des Andrückgetriebes 30 führt dazu, dass die Reibungsbremse 1 dauernd unter Kraft (Strom im Andrückmotor 13) stehen muss, um eine bestimmte Position (Bremswirkung) zu halten. Um dabei eine unerwünschte hohe Erwärmung im Andrückmotor 13 zu vermeiden, kann auch eine mechanische oder elektromechanische Sperrvorrichtung vorgesehen sein, mit der das Andrückgetriebe 30 gesperrt werden kann. Die Sperrvorrichtung kann z.B. aus einem Elektromagneten bestehen, der den Andrückmotor 13, oder ein anderes Teil im Andrückgetriebe 30, im bestromten Zustand festhält und im stromlosen Zustand wieder freigibt (um Öffnen der Bremse im energielosen Zustand zu ermöglichen), oder umgekehrt, je nach Anwendung. Das Festhalten kann entweder kraftschlüssig, z.B. durch Reibung, oder formschlüssig, z.B. durch Eingriff in ein Zahnrad, geschehen. Bei Eisenbahn-, Kran- und Windradbremsen kann die Sperrvorrichtung so eingesetzt werden, dass diese in bestromtem Zustand die Reibungsbremse 1 in der jeweiligen Lage festhält und bei Stromlosigkeit die automatisch Bremsung erlaubt.

Aus Fig.1 erkennt man weiters, dass ein Andrückmotoren 13 thermisch möglichst weit vom Bremsbelag 6 entfernt angeordnet ist, um einen möglichst schlechten Wärmeübergang vom Bremsbelag 6 zum Andrückmotor 13 zu erreichen. Die Belagshitze kann auch durch Ausnehmungen im Halteteil 7 möglichst gut gegen den Wärmeübergang vom Bremsbelag 6 in den Halteteil 7 isoliert werden, z.B. indem der Halteteil 7 nur auf Stegen am Belagsträger des Bremsbelages 6 aufliegt. Der Halteteil 7 leitet hier die Wärme thermisch günstig nur über die ineinander verschachtelten Lager 15, 16 in die Andrückeinheit 10 ein. Bei der gezeigten vorteilhaften Ausgestaltung kann sogar über weite Temperaturbereiche die ganze Andrückeinheit 10 mit Andrückgetriebe 30 und Andrückgetriebegehäuse 11 als Wärmesenke für die Andrückmotoren 13 verwendet werden, zumindest solange die Andrückeinheit 10 kühler bleibt als die Andrückmotoren 13.

Auf der Andrückwelle 8 kann weiters ein Federelement 40 mit zwei Anschlagenden 41, 42 angeordnet sein (Fig.3). Dieses Federelement 40 dient zum Zurückdrehen der Andrückwelle 8 und wird bevorzugt nur in ungünstigen Drehwinkeln der Betätigungswelle 14 angefahren, in denen kein selbsttätiges Zurückdrehen der Betätigungswelle 14 erfolgt. Damit kann vermieden werden, dass zum Lösen der Reibungsbremse 1 elektrische Energie aufgebracht werden muss. Wann das Federelement 40 zu spannen beginnt, wird durch die Anschlagenden 41, 42 des Federelements 40 und den zugeordneten Anschlägen 43 auf der Betätigungswelle 14 und am Getriebegehäuse 11 (hier nicht sichtbar) bestimmt. Der Anschlag am Getriebegehäuse 11 könnte z.B. in Form einer Bohrung ausgeführt sein, in die das Anschlagende 42 des Federelements 40 eingreift. Auch ein Langloch oder Stift könnte als Anschlag dienen und ermöglichen, dass das Federelement 40 in bestimmten Bereichen inaktiv ist (vom Anschlag entfernt) und in bestimmten Stellungen an den Anschlag (Stift, Langlochende) angelegt wird. D.h., das Federelement 40 bleibt solange kraftlos, bis zwei Anschläge in Eingriff geraten, womit das Federelement 40 gespannt wird. Das Federelement 40 kann dabei so ausgelegt werden, dass es nur bei einer Betriebsbremsung gegen einen Anschlag läuft.

Wenn die Reibungsbremse z.B. in eine Parkbremsposition gefahren wird, können die Anschläge so ausgeführt sein, dass der Anschlag unter dem Federelement 40 durchfährt, um dabei keine Federwirkung zu erzeugen und damit ein unerwünschtes Lösen der Bremse aus der Parkbremsposition zu unterbinden.

Bei Betätigen der Reibungsbremse 1 wird die Betätigungswelle 14 mit dem Anschlag 43 verdreht. Solange der Anschlag 43 auf der Betätigungswelle 43 nicht gegen das zugehörige Anschlagende 41 des Federelements 40 läuft, bleibt das Federelement 40 kraftlos. Erst wenn die beiden Anschläge, 41, 43 in Eingriff kommen, wird das Federelement 40 gespannt, womit eine Rückstellkraft erzeugt wird. Durch Wahl der Position der Anschläge 41, 42, 43 kann die Funktion und Wirkung des Federelements 40 natürlich beliebig angepasst werden.

Das Federelement 40 kann dabei auch dazu dienen, den Zahnflankenumschlag im Andrückgetriebe 10 zu minimieren, weil es auch dafür sorgen kann, dass immer Kräfte in Andrückrichtung in der Reibungsbremse 1 vorhanden sind und im Wesentlichen kein Umschlag an den Zahnflanken zwischen der Zahnflanke in Richtung Andrücken auf die Zahnflanke in Richtung Lösen der Bremse stattfindet. Dies tritt z.B. auf, wenn die Reibungsbremse 1 aus einer Bremsposition, in der Selbstverstärkung auftritt, gelöst werden soll, was unter Umständen nur durch Aufbringen eines entsprechend großen Lösemoments, hervorgerufen durch das Federelement 40, möglich sein kann.

In günstigen Winkelbereichen des Exzenters, insbesondere in Winkelbereichen, in denen keine Selbstverstärkung auftritt, tritt dieses notwendige Lösemoment in umgekehrter Richtung zum Andrückmoment nicht auf, da durch bloße Verringerung des Andrückmoments durch das Betätigungsmittel die Bremse selbsttätig gelöst wird.

Der Anschlag 43 an der Betätigungswelle 14 kann auch noch eine zusätzliche Funktion erfüllen. Die Betätigungswelle 14 kann in eine "Parkbremsstellung" gebracht werden, die ungefähr dem bremsscheibennahen Totpunkt T der exzentrisch gelagerten Andrückwelle 8 entspricht (siehe Fig.5). Der Exzenter wird für die Parkbremsstellung -PB einige Winkelgrad weiter als der bremsscheibennahe Totpunkt T gedreht und schlägt dann mit dem Anschlag 43 auf der Betätigungswelle 14 auf einen weiteren zweiten Anschlag 44 im Getriebegehäuse 11 (siehe Fig.5). Der zweite Anschlag 44 ist somit im Bereich der gewünschten Parkbremsposition -PB vorgesehen. Damit wird sichergestellt, dass sich die Betätigungswelle 14 nicht weiterdrehen kann (weiter vom Totpunkt T weg). Ebenso kann die Betätigungswelle 14 ohne äußere Kraft (bzw. Moment) nicht in die andere Richtung aus der Parkbremsposition -PB gelöst werden. Damit wird sichergestellt, dass die Reibungsbremse 1 auch im energielosen Zustand der Reibungsbremse nicht gelöst werden kann, auch nicht, wenn das Fahrzeug z.B. zwangsweise bewegt wird.

Der Anschlag 43 an der Betätigungswelle 14 und der zweite Anschlag 44 im Getriebegehäuse 11 kann aber auch zum Finden einer Absolutposition des Andrückmotors 13 genutzt werden. Bekannterweise haben Elektromotoren bzw. Servomotoren zwar einen Positionsgeber, der aber nur die Lage des Rotors im Elektromotor erfasst. Damit kann aber nicht sicher die absolute Stellung der Betätigungswelle 14 beim Einschalten des Stromes ermittelt werden, da durch die Untersetzung zwischen Andrückmotor 13 und Betätigungswelle 14 die absolute Position fehlt. Wenn nun absichtlich der Anschlag 43 der Betätigungswelle 14 gegen den zweiten Anschlag 44 im Getriebegehäuse 11 gefahren wird, erkennt man am steigenden Motorstrom und der bis zur Blockade sinkenden Drehzahl die Absolutposition am Anschlag. Mit diesem Wissen kann dann im Betrieb der Reibungsbremse 1 mit dem Positionsgeber im Andrückmotor 13 mit sehr feiner Auflösung (durch die Untersetzung) die gewünschte Position der Betätigungswelle 14 (Winkel) angefahren und zurückgemessen werden (Sollposition und Istposition). Da die Reibungsbremse 1 eine Vollbremsung in sehr kurzer Zeit (typischerweise 0,2s) bewerkstelligen muss, kann auch die Suche nach der Absolutposition problemlos innerhalb von Bruchteilen von Sekunden durchgeführt werden, z.B. immer beim Starten des Fahrzeuges oder beim Lösen der Parkbremse. Grundsätzlich könnte aber die Absolutposititon auch im laufenden Betrieb eines Fahrzeugs oder einer Maschine gefunden werden, wenn z.B. die Andrückeinrichtung 10 durch den Verschleißnachsteller 20 so weit von der Reibfläche abgehoben wird, dass es bei Betätigung der Andrückeinrichtung 10 (zur Absolutpositionssuche) zu keinem Kontakt zwischen Bremsbelag und Reibfläche kommen kann. Die Mehrfachfunktion der Anschläge muss aber natürlich nicht in einer Anordnung gelöst werden, sondern es können auch verschiedene Anschläge für verschiedene Funktionen gewählt werden bzw. kann eine Absolutposition auch anders () gewonnen werden, z.B. mit Magnet und Hall-Sensor, Schalter, etc.

Fig.4 zeigt eine Seitenansicht des Andrückgetriebes 30. Dabei ist insbesondere die Exzentrizität E zwischen Drehachse der Betätigungswelle 14 und Bohrung bzw. Andrückwelle 8 zu erkennen. Mit VW ist eine Drehrichtung der Bremsscheibe 4 in angenommener Vorwärtsfahrtrichtung bezeichnet.

Mit weiterer Bezugnahme auf die Fig.5 wird nun die Funktion der Reibungsbremse 1 näher erläutert. Die Exzenterstellung ist bei Beginn der Bremsung (in gerade noch ungebremsten Zustand) in Stellung -BB. Dabei beziehen sich die Winkel hier auf die unterste Stellung des Exzenters, die mit 0° bezeichnet sei. Die Vollbremsung würde hier bei einem positiven Winkel zu 0°, also +VB erreicht. Bei einer Bremsung wird die Betätigungswelle 14 folglich von der Anfangsposition -BB in Richtung einer Endposition, in der das gewünschte Bremsmoment erzeugt wird, z.B. der Position +VB, verdreht. Im Bereich von 0° bis +VB tritt übrigens eine an sich bekannte Selbstverstärkung auf, weil die entstehende reibungsbedingte Mitnahmekraft zwischen Bremsbelag 6 und Bremsscheibe 4 in Fahrtrichtung vorwärts (VW) die Drehung der Betätigungswelle 14 unterstützt. Der Betätigungsbereich der Reibungsbremse zwischen Bremsbeginn -BB und Vollbremsung +VB kann z.B. zwischen -60° (-BB) bis +60° (+VB) liegen. Bevorzugt wird im Betrieb der Reibungsbremse 1 der Bereich übermäßiger Selbstverstärkung, der z.B. bei ca. +65° bis +70° beginnt, vermieden, da dieser nur schwer zu kontrollieren ist.

Im Bereich VB von z.B. +20° bis +60° kann das besprochene, zur Zurückdrehung bestimmte Federelement 40 gespannt werden. In dieser Ausführung wäre die Reibungsbremse 1 mit dem Federelement 40 so gedacht, dass sich die Reibungsbremse 1 im energielosen Zustand (Antriebmotor 13 stromlos) öffnet. Dies ist eine typische Anforderung an Straßenfahrzeuge. Bei einer umgekehrten Auslegung der Reibungsbremse 1 würde die Reibungsbremse 1 im energielosen Zustand automatisch bremsen. Dies wäre die typische Auslegung für Schienenfahrzeuge, die bei Ausfall automatisch vollbremsen. In Windrädern, oder Maschinen allgemein (z.B. Kränen), fordert man ebenfalls, dass die Reibungsbremse 1 bei Energielosigkeit automatisch bremst. Dies kann in einer Ausführung der Reibungsbremse 1 erreicht werden, bei der das Federelement 40 umgekehrt ausgelegt ist und die Reibungsbremse 1 bei Energielosigkeit zudrückt (in Richtung stärkeres Bremsen oder Vollbremsung).

Ebenfalls ist in Fig.5 beispielhaft eine Parkbremsstellung -PB eingezeichnet. Dazu wird die Betätigungswelle 14 entgegen der Betriebsbremsrichtung bis zu einem scheibennahen Totpunkt T, oder wie hier einige Winkelgrade weiter, verdreht. Die Parkbremsstellung -PB kann z.B. durch Anschlag des Betätigungswellenanschlages an einem Anschlag im Andrückgetriebegehäuse 11 erreicht werden. Ohne Anschlag bleibt die Reibungsbremse 1 im Bereich des scheibennahen Totpunktes T ebenfalls stabil energielos fixiert, so dass prinzipiell auch ohne diesen Anschlag eine energielose Parkbremse möglich ist. Die Parkbremsposition -PB wird deshalb weit entgegengesetzt der Betriebsbremse gewählt, damit dabei das Federelement 40 kraftlos bleibt, da ansonsten das Federelement 40 die Reibungsbremse 1 im energielosen Zustand stets aus der Parkbremsposition -PB drehen würde. Bei der umgekehrter Federwirkung für automatische Bremsbetätigung im energielosen Zustand ist die Parkbremsfunktion -PB natürlich einfach durch die Federkraft gewährleistet, so dass keine eigene Parkbremsstellung -PB angefahren werden muss.

## Patentansprüche

1. Reibungsbremse mit einem Bremsbelag (6) und einer ortsfest in der Reibungsbremse (1) angeordneten Andrückeinheit (10) zum Andrücken des Bremsbelages (6) gegen eine Reibfläche, wobei der Bremsbelag (6) an einem Halteteil (7) anliegt und im Halteteil (7) eine Andrückwelle (8) oder ein Wellenzapfen (18) drehbar gelagert ist, **dadurch gekennzeichnet, dass** die Andrückeinheit (10) als Zahnrad-Andrückgetriebe (30) ausgeführt ist, das in einem Andrückgetriebegehäuse (11) angeordnet ist, wobei im Andrückgetriebegehäuse (11) eine Betätigungswelle (14) drehbar gelagert angeordnet ist, in der die Andrückwelle (8) in einer axialen, exzentrischen Bohrung gelagert ist oder an dessen axialem Ende der Wellenzapfen (18) exzentrisch angeordnet ist, und das Zahnrad-Andrückgetriebe (30) die Betätigungswelle (14) verdreht, **und dass** das Andrückgetriebegehäuse (11) an der Reibungsbremse (1) angeordnet ist und als ortsfester Bremsenteil für die Andrückeinheit (10) dient, wobei das Andrückgetriebegehäuse (11) zur Aufnahme der beim Bremsen durch den Exzenter erzeugten Belagsandrückkräfte und zur Ableitung der Belagsandrückkräfte an die Reibungsbremse (1) vorgesehen ist.

2. Reibungsbremse nach Anspruch 1, **dadurch gekennzeichnet, dass** das Andrückgetriebegehäuse (11) zur Aufnahme der beim Bremsen entstehenden Reibungskräfte vorgesehen ist.

3. Reibungsbremse nach Anspruch 1 oder 2, **dadurch gekennzeichnet, dass** an der Reibungsbremse (1) ein Verschleißnachsteller (20) vorgesehen ist und das Andrückgetriebegehäuse (11) oder der Halteteil (7) am Verschleißnachsteller (20) angeordnet ist.

4. Reibungsbremse nach Anspruch 3, **dadurch gekennzeichnet, dass** der Verschleißnachsteller (20) eine Verschleißnachstellschraube (22) umfasst, die in das Andrückgetriebegehäuse (11) oder in den Halteteil (7) oder in einer im Andrückgetriebegehäuse (11) oder im Halteteil (7) angeordneten Gewindehülse (24) geschraubt ist.

5. Reibungsbremse nach Anspruch 4, **dadurch gekennzeichnet, dass** die Verschleißnachstellschraube (22) an der Reibungsbremse (1) abgestützt ist.

6. Reibungsbremse nach einem der Ansprüche 1 bis 5, **dadurch gekennzeichnet, dass** das Andrückgetriebe als mehrstufiges Getriebe mit Stirnzahnrädern ausgeführt ist.

7. Reibungsbremse nach einem der Ansprüche 1 bis 6, **dadurch gekennzeichnet, dass** das Andrückgetriebegehäuse (11) mehrteilig ausgeführt ist, wobei zumindest eines der Teilgehäuse zur Aufnahme der beim Bremsen entstehenden Belagsandrückkräfte vorgesehen ist.

8. Reibungsbremse nach einem der Ansprüche 1 bis 7, **dadurch gekennzeichnet, dass** am Andrückgetriebegehäuse (11) ein Andrückmotorgehäuse (12) zur Aufnahme eines Andrückmotors (13) angeordnet ist, wobei der Andrückmotor (13) das Andrückgetriebe antreibt.

9. Reibungsbremse nach einem der Ansprüche 3 bis 8, **dadurch gekennzeichnet, dass** an der Reibungsbremse (1) ein Verschleißnachstellermotorgehäuse (21) zur Aufnahme eines Verschleißnachstellmotors (23) vorgesehen ist.

10. Reibungsbremse nach Anspruch 9, **dadurch gekennzeichnet, dass** der Verschleißnachstellmotor (23) ein Verschleißnachstellgetriebe antreibt.

11. Reibungsbremse nach einem der Ansprüche 1 bis 10, **dadurch gekennzeichnet, dass** in der Reibungsbremse (1) ein Federelement (40) mit zwei Anschlagsenden (41, 42) vorgesehen ist und die Andrückeinheit (10) eine von Andrückgetriebe angetriebene Betätigungswelle (14) umfasst, wobei ein erstes Anschlagende (42) mit einem ersten Anschlag am Andrückgetriebegehäuse (11) und das zweite Anschlagende (41) mit einem Anschlag (43) an der Betätigungswelle (14) zusammenwirkt.

12. Reibungsbremse nach Anspruch 11, **dadurch gekennzeichnet, dass** am Andrückgetriebegehäuse (11) ein zweiter Anschlag (44) vorgesehen ist, der mit dem Anschlag (43) an der Betätigungswelle (14) zusammenwirkt.

## Claims

1. Friction brake comprising a brake pad (6) and a pressing unit (10) stationary arranged in the friction brake (1) for pressing the brake pad (6) against a friction surface, whereas the brake pad (6) abuts a holding part (7) and a pressing shaft (8) or a shaft journal (18) is rotatably mounted in the holding part (7), **characterized in that** the pressing unit (10) is designed as a gear pressing transmission (30) which is arranged in a pressing transmission housing (11), whereas an actuating shaft (14) is arranged so as to be rotatably mounted in the pressing transmission housing (11), in which actuating shaft the pressing shaft (8) is mounted in an axial, eccentric bore or at which axial end the shaft journal (18) is eccentrically arranged, and the actuating shaft (14) is rotated by the gear pressing transmission (30), and **in that** the pressing transmission housing (11) is arranged on the friction brake (1) and is used as a stationary brake part for the pressing unit (10), whereas the pressing transmission housing (11) being provided for absorbing the pad pressing forces generated by the eccentric during braking and for diverting the pad pressing forces to the friction brake (1).

2. Friction brake according to claim 1, **characterized in that** the pressing transmission housing (11) is provided for absorbing the frictional forces generated during braking.

3. Friction brake according to either claim 1 or claim 2, **characterized in that** a wear adjuster (20) is provided on the friction brake (1) and the pressing transmission housing (11) or the holding part (7) is arranged on the wear adjuster (20).

4. Friction brake according to claim 3, **characterized in that** the wear adjuster (20) comprises a wear adjustment screw (22) which is screwed into the pressing transmission housing (11) or into the holding part (7) or into a threaded sleeve (24) arranged in the pressing transmission housing (11) or in the holding part (7).

5. Friction brake according to claim 4, **characterized in that** the wear adjustment screw (22) is supported on the friction brake (1).

6. Friction brake according to any of claims 1 to 5, **characterized in that** the pressing transmission is designed as a multi-stage transmission having spur gears.

7. Friction brake according to any of claims 1 to 6, **characterized in that** the pressing transmission housing (11) is in multiple parts, whereas at least one of the part housings being provided for absorbing the pad pressing forces generated during braking.

8. Friction brake according to any of claims 1 to 7, **characterized in that** a pressing motor housing (12) is arranged on the pressing transmission housing (11) for receiving a pressing motor (13), whereas the pressing motor (13) drives the pressing transmission.

9. Friction brake according to any of claims 3 to 8, **characterized in that** a wear adjustment motor housing (21) for receiving a wear adjustment motor (23) is provided on the friction brake (1).

10. Friction brake according to claim 9, **characterized in that** the wear adjustment motor (23) drives a wear adjustment transmission.

11. Friction brake according to any of claims 1 to 10, **characterized in that** a spring element (40) having two stop ends (41, 42) is provided in the friction brake (1) and the pressing unit (10) comprises an actuating shaft (14) driven by the pressing transmission, whereas a first stop end (42) interacts with a first stop on the pressing transmission housing (11) and the second stop end (41) interacts with a stop (43) on the actuating shaft (14).

12. Friction brake according to claim 11, **characterized in that** a second stop (44) is provided on the pressing transmission housing (11), which second stop cooperates with the stop (43) on the actuating shaft (14).

## Revendications

1. Frein à friction comprenant une garniture de frein (6) et une unité de pression (10) disposée de manière fixe dans le frein à friction (1) pour presser la garniture de frein (6) contre une surface de friction, dans lequel la garniture de frein (6) repose sur une pièce de maintien (7) et un arbre de pression (8) ou un tourillon d'arbre (18) est monté en rotation dans la pièce de maintien (7), **caractérisé en ce que** l'unité de pression (10) est réalisée sous la forme d'un engrenage de pression à roue dentée (30) qui est disposé dans un carter d'engrenage de pression (11), un arbre d'actionnement (14), dans lequel l'arbre de pression (8) est monté dans un alésage axial excentré ou à l'extrémité axiale duquel le tourillon d'arbre (18) est disposé de manière excentrée, étant monté en rotation dans le carter d'engrenage de pression (11), et l'engrenage de pression à roue dentée (30) fait tourner l'arbre d'actionnement (14), **et en ce que** le carter d'engrenage de pression (11) est disposé au niveau du frein à friction (1) et sert de pièce de freinage fixe pour l'unité de pression (10), le carter d'engrenage de pression (11) étant prévu pour recevoir les forces de pression de garniture produites par l'excentrique lors du freinage et pour dissiper les forces de pression de garniture au niveau du frein à friction (1).

2. Frein à friction selon la revendication 1, **caractérisé en ce que** le carter d'engrenage de pression (11) est prévu pour recevoir les forces de friction produites lors du freinage.

3. Frein à friction selon la revendication 1 ou 2, **caractérisé en ce qu'**un dispositif de rattrapage d'usure (20) est prévu au niveau du frein à friction (1) et **en ce que** le carter d'engrenage de pression (11) ou la pièce de maintien (7) est disposé au niveau du dispositif de rattrapage d'usure (20).

4. Frein à friction selon la revendication 3, **caractérisé en ce que** le dispositif de rattrapage d'usure (20) comprend une vis de rattrapage d'usure (22) qui est vissée dans le carter d'engrenage de pression (11) ou dans la pièce de maintien (7) ou dans une douille filetée (24) disposée dans le carter d'engrenage de pression (11) ou dans la pièce de maintien (7).

5. Frein à friction selon la revendication 4, **caractérisé en ce que** la vis de rattrapage d'usure (22) repose sur le frein à friction (1).

6. Frein à friction selon l'une des revendications 1 à 5, **caractérisé en ce que** l'engrenage de pression est réalisé sous la forme d'un engrenage à plusieurs étages comportant des roues dentées frontales.

7. Frein à friction selon l'une des revendications 1 à 6, **caractérisé en ce que** le carter d'engrenage de pression (11) est réalisé en plusieurs parties, au moins l'un des carters partiels étant prévu pour recevoir les forces de pression des garnitures produites lors du freinage.

8. Frein à friction selon l'une des revendications 1 à 7, **caractérisé en ce qu'**un carter de moteur à pression (12) destiné à recevoir un moteur à pression (13) est disposé au niveau du carter d'engrenage de pression (11), le moteur à pression (13) entraînant l'engrenage de pression.

9. Frein à friction selon l'une des revendications 3 à 8, **caractérisé en ce qu'**un carter de moteur de rattrapage d'usure (21) est prévu au niveau du frein à friction (1) pour recevoir un moteur de rattrapage d'usure (23).

10. Frein à friction selon la revendication 9, **caractérisé en ce que** le moteur de rattrapage d'usure (23) entraîne un engrenage de rattrapage d'usure.

11. Frein à friction selon l'une des revendications 1 à 10, **caractérisé en ce qu'**un élément de ressort (40) comportant deux extrémités de butée (41, 42) est prévu dans le frein à friction (1) et **en ce que** l'unité de pression (10) comprend un arbre d'actionnement (14) entraîné par des engrenages de pression, une première extrémité de butée (42) coopérant avec une première butée au niveau du carter d'engrenage de pression (11) et la seconde extrémité de butée (41) coopérant avec une butée (43) au niveau de l'arbre d'actionnement (14).

12. Frein à friction selon la revendication 11, **caractérisé en ce qu'**une seconde butée (44) est prévue au niveau du carter d'engrenage de pression (11), laquelle seconde butée coopère avec la butée (43) au niveau de l'arbre d'actionnement (14).
